(19) Europäisches Patentamt
European Patent Office
Office européen des brevets

(11) EP 1 192 220 B1

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(21) Anmeldenummer: **00945783.9**

(22) Anmeldetag: **20.06.2000**

(51) Int Cl.[7]: **C08L 33/12**, C08J 3/18

(86) Internationale Anmeldenummer:
**PCT/EP2000/005669**

(87) Internationale Veröffentlichungsnummer:
**WO 2000/078865 (28.12.2000 Gazette 2000/52)**

(54) **BIMODALE POLY(METH) ACRYLATPLASTISOLE UND VERFAHREN ZU IHRER HERSTELLUNG**

IMPROVED POLY(METH)ACRYLATE PLASTISOLS AND METHOD FOR PRODUCING THE SAME

PLASTISOLS EN POLY(METH)ACRYLATE BIMODAUX ET PROCEDE POUR LES PRODUIRE

(84) Benannte Vertragsstaaten:
**AT BE CH CY DE DK ES FI FR GB GR IE IT LI LU MC NL PT SE**

(30) Priorität: **21.06.1999 DE 19928352**

(43) Veröffentlichungstag der Anmeldung:
**03.04.2002 Patentblatt 2002/14**

(73) Patentinhaber: **Röhm GmbH & Co. KG
64293 Darmstadt (DE)**

(72) Erfinder:
- **LÖHDEN, Gerd
D-63457 Hanau (DE)**
- **TRÄBING, Mauren
D-63477 Maintal (DE)**

(56) Entgegenhaltungen:
**EP-A- 0 381 971**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft Poly(meth)acrylatplastisole sowie ein Verfahren zu ihrer Herstellung. Insbesonders richtet sich die Erfindung auf Plastisole, die Bindemittel auf Basis von Poly(meth)acrylaten enthalten, welche wiederum eine bimodale Größenverteilung der Primärteilchen aufweisen. Weiterhin umfaßt die Erfindung ein Verfahren zur Herstellung solcher Poly(meth)acrylate mit bimodaler Primärteilchengrößenverteilung, wie sie in den Plastisolen der Erfindung eingesetzt werden.

Bei Plastisolen handelt es sich um kolloidale Suspensionen einer Polymerkomponente (Bindemittel) in Weichmacher. Plastisole stellen mithin in der Regel zweiphasige Systeme dar, deren eine Komponente ein Polymer und die zweite ein geeigneter Weichmacher ist. Plastisole werden üblicherweise bei Umgebungstemperatur durch Streichen, Gießen, Tauchen, Spritzen und dergleichen in die Form des fertigen Produkts gebracht. Anschließend erfolgt durch Erwärmung die "Gelierung"; die Weichmacher lösen die Polymerteilchen auf. Nach dem Abkühlen erhält man so ein homogenes, mehr oder weniger flexibles Produkt, das kompakt oder geschäumt sein kann. Prinzipiell sind Bindemittel auf der Basis verschiedenster Polymere denkbar. Zur technischen Anwendung sind allerdings nur sehr wenige Polymere gekommen. Die weitaus bedeutendste Klasse von Polymeren, die für diesen Zweck eingesetzt werden, leitet sich vom Polyvinylchlorid (PVC) ab. Unter ökologischen Gesichtspunkten scheint es allerdings sehr zweckmäßig, die PVC-Plastisole durch umweltfreundlichere Plastisole zu substituieren. Hierfür stehen beispielsweise auch Plastisole auf der Basis von Poly(meth)acrylaten seit einiger Zeit zur Verfügung.

Zum näheren Stand der Technik der Poly(meth)acrylat-Plastisole werden die folgenden Druckschriften genannt:

D1 = DE-PS 934 498;
D2 = FR-A 2,291,248;
D3 = EP 0 774 483 A2;
D4 = JP Offenlegungsschrift Hei 10-298391 (10.11.1998).

Plastisole müssen - teilweise in Abhängigkeit vom angestrebten Anwendungszweck - einem komplexen Anforderungsprofil genügen. Hierbei spielen unter anderem die rheologischen Eigenschaften des Plastisols, insbesondere seine Viskosität, die Lagerstabilität des Plastisols, die Weichmacherverträglichkeit sowie die mechanischen Eigenschaften der aus dem Plastisol gefertigten Produkte entscheidende Rollen. Auch das Verhältnis von Harz (Bindemittel oder Polymer) zu Weichmacher ist für viele Anwendungen wichtig.

Wichtigste Eigenschaft eines Plastisols ist es bei niedriger Temperatur verarbeitbar zu sein, d.h. eine relativ niedrige Viskosität aufzuweisen, und erst bei einem Erwärmen und anschließendem Abkühlen zu einem festen Film zu gelieren. Von der Technik wird außerdem eine möglichst geringe Viskosität des Plastisols gefordert, um eine breites Spektrum der Verarbeitungstechniken abzudecken. Beim Streichen von Plastisolen etwa darf beim Geschwindigkeitsgefälle unter der Rakel keine Dilatanz auftreten. Dilatanz kann zu Beschichtungsfehlern wie ungleichmäßige Dicke führen. Außerdem wirken auf die Rakeleinrichtung bei Dilatanz große Kräfte. Bei Haftstrichen auf Geweben muß die Viskosität bei niedrigen Geschwindigkeitsgefällen genügend hoch sein, um ein Durchschlagen des Plastisols durch das Gewebe zu verhindern. Eine Fließgrenze kann zusätzlich hier von Nutzen sein. Für das Gewebebeschichten ist folglich eine Strukturviskosität erwünscht. Im Gegensatz dazu ist für Imprägnierstriche, z.B. Planenbeschichtung, eine niedrige Viskosität bei niedrigen Geschwindigkeitsgefällen nötig, damit das Plastisol das Gewebe vollständig durchdringt. Im Fall des Tauchens von Handschuhen mit Trägergeweben muß die Viskosität so hoch sein, daß das Plastisol während des Eintauch- und Abtropfvorgangs nicht zu tief in das Gewebe eindringt. Obwohl die Rheologie des Plastisols durch Additive verändert werden kann, geht der Haupteinfluß in all den genannten Fällen wesentlich vom Harz oder Bindemittel aus. Die Verwendung von sprühgetrockneten Emulsionspolymerisaten auf Basis von Poly(meth)acrylaten nach dem Stand der Technik führt in Kombination mit ausgewählten Weichmachern zwar zu guten Geliereigenschaften, aber auch zu einer geringen Lagerstabilität und relativ hohen Verarbeitungsviskositäten.

Eine weiteres wesentliches Problem der Poly(meth)acrylatplastisole stellt immer noch ihre im Vergleich zu herkömmlichen Plastisolen ungenügende Lagerstabilität, d.h. eine zu starke Änderung der Viskosität mit zunehmender Lagerzeit, dar. Das Problem der Lagerstabilität versucht die D3 u. a. dadurch zu lösen, daß man Emulsionspolymerisaten gemahlene Suspensionspolymerisate zusetzt. Durch die Zugabe solcher Extenderpolymere erreicht man zum einen eine erhebliche Reduktion der Kosten. Suspensionspolymerisate sind deutlich billiger als Emulsionspolymerisate oder Dispersionen. Zum anderen wird die Viskosität der Plastisole generell reduziert, die mittlere Teilchengröße wird angehoben. Nachteil dieses Verfahrens ist der Umstand, daß eine höhere Teilchengröße zu einem erschwerten Gelieren des Plastisols führt, da die größeren Suspensionspolymerisate unter Umständen nicht mehr vollständig in der kurzen Zeit gelieren, die in der Technik gefordert ist.

Für viele Zwecke wird es als vorteilhaft angesehen, Plastisole mit einem möglichst hohen Gehalt an Harz und einem möglichst geringen Weichmacheranteil einsetzen zu können. Außerdem kann ein hoher Weichmacheranteil im

Plastisol zu Umweltproblemen führen. So kann es bei Pasten (Plastisolen), die einen sehr hohen Weichmachergehalt bestimmter Weichmachertypen aufweisen, dazu kommen, daß die gelierten Filme dazu neigen, Weichmacher auszudampfen oder gar auszuschwitzen. Dabei wird ein Teil des Weichmachers als flüssiger Film auf der Oberfläche des gelierten Produkts abgeschieden. Bei PMMA-Plastisolen tritt dies besonders bei den Dialkylphthalaten auf, die aufgrund ihres günstigen Preises ansonsten sehr attraktiv für einen Einsatz erscheinen. Nach dem Stand der Technik sind PMMA-Plastisole mit einem maximalen Bindemittelgehalt von 40 bis 45 % verarbeitbar. Eine Steigerung des Harzanteils des Plastisols und damit einhergehend eine Verringerung des Weichmacheranteils wäre zu begrüßen.

Die D4 offenbart Acrylharz-Plastisole, die erhalten werden, indem man pulverförmigen Acrylharzen eine kleine Menge größerer Polymerteilchen eines weiteren Acrylharzes beimengt. In der Kurve der Korngrößenverteilung dieser Harze treten dann zwei Peaks auf. Das pulverförmige Acrylharz besteht dabei aus 90 bis 60 Massenprozent einer Fraktion mit der mittleren Teilchengröße unter 10 µm und 10 bis 40 Massenprozent einer Fraktion mit der mittleren Teilchengröße zwischen 10 und 500 µm. Als Weichmacher für die in der D4 genannten Acrylharz-Plastisole dienen insbesondere Benzoesäureester, wie etwa Tripropylenglykoldibenzoat. Bei den Plastisol-Systemen der D4 handelt es sich mithin um an sich bekannte Extendersysteme, d.h. ein monomodales Emulsionspolymerisat wird mit einem feingemahlenen Perlpolymerisat (Suspensionspolymerisat) gestreckt. Obwohl die durch die D4 offenbarten Systeme recht gute Verträglichkeiten besitzen und der Bindemittelgehalt schon höher als 50 Massenprozent sein kann (bezogen auf die Gesamtmasse aus Harz und Weichmacher), scheinen die Viskositäten und Viskositätsstabilitäten doch noch verbesserungswürdig.

In Anbetracht des hierin vorstehend zitierten und diskutierten Standes der Technik lag der vorliegenden Erfindung die Aufgabe zugrunde, ein Plastisol auf Basis von Poly(meth)acrylaten und Weichmacher anzugeben, welches hervorragende rheologische Eigenschaften besitzt, die es für eine Vielzahl verschiedener Verarbeitungstechniken prädestinieren. Hierbei soll das Plastisol eine möglichst niedrige Viskosität aufweisen, die auch über eine längere Zeit der Lagerung möglichst stabil bleibt.

Eine weitere der Erfindung zugrundeliegende Aufgabe kann darin gesehen werden, Plastisole mit guter oder verbesserter Weichmacherverträglichkeit zur Verfügung zu stellen, d.h. eine möglichst umfangreiche Palette von Weichmachern soll ohne wesentliche Verschlechterung der Eigenschaften des Plastisols oder der daraus hergestellten Filme einsetzbar sein. Insbesondere soll auch die Verträglichkeit mit wohlfeilen und preiswerten Weichmachern gegeben sein.

Noch eine Aufgabe der Erfindung war es, ein Plastisol zu finden, das gute Filmeigenschaften und gute Gelierfähigkeit mit einer akzeptablen Lagerstabilität kombiniert.

Desweiteren war es Aufgabe der Erfindung die mechanischen Eigenschaften gelierter Plastisolfilme zu verbessern.

Noch eine Aufgabe der Erfindung war es, Poly(meth)acrylat-Plastisole aufzufinden, die einen hohen, nach Möglichkeit einen höheren als bislang möglich, Bindemittelgehalt der Pasten zulassen, ohne daß die Qualität der anderen Eigenschaften des Plastisols oder die Eigenschaften daraus resultierender Filme auf ein nicht akzeptables Maß gesenkt wird.

Diese und nicht näher genannte weitere Aufgaben, die sich jedoch wie selbstverständlich oder in naheliegender Weise aus der einleitenden Erörterung des Standes der Technik ergeben, beziehungsweise ableiten lassen, werden im Rahmen der Erfindung durch ein Plastisol des Anspruchs 1 gelöst. Vorteilhafte Ausgestaltungen der erfindungsgemäßen Plastisole werden in den auf Anspruch 1 direkt oder indirekt rückbezogenen Ansprüchen unter Schutz gestellt.

Dadurch, daß Plastisole aufweisend

I. ein oder mehrere Polymerisate und/oder Copolymerisate von (Meth)acrylaten erhältlich durch Polymerisation von Zusammensetzungen enthaltend als polymerisierbare Bestandteile

A) 20 bis 100 Gew.-% Methylmethacrylat,

B) 0 bis 80 Gew.-% eines von Methylmethacrylat verschiedenen (Meth)acrylats der Formel I,

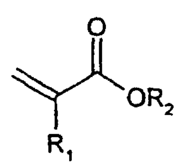

(I)

worin

$R_1$ für Wasserstoff oder Methyl und
$R_2$ für einen linearen oder verzweigten Alkylrest mit 1 bis 18 Kohlenstoffatomen steht,

C) 0 bis 40 Gew.-% eines weiteren von A) und B) verschiedenen vinylisch ungesättigten Monomeren und

D) 0 bis 40 Gew.-% eines haftungsvermittelnden Monomeren,

wobei A) bis D) 100 Gew.-% der polymerisierbaren Bestandteile ergeben,

II. auf 100 Gew.-Teile der Polymerisate und/oder Copolymerisate aus I. mit diesen verträgliche-Weichmacher in Anteilen von 5 bis 400 Gew.-Teilen und

III. auf 100 Gew.-Teile der Komponente I. anorganische Füllstoffe in Mengen von 0 bis 700 Gew.-Teilen;

sich dadurch auszeichnen, daß die Polymerisate und/oder Copolymerisate der (Meth)acrylate Emulsionspolymerisate sind, die eine bi- oder multimodale Größenverteilung der Primärpartikel aufweisen, gelingt es auf nicht ohne weiteres absehbare Weise eine Reihe von Vorteilen zu erzielen. Hierzu gehören unter anderem:

- Verglichen mit Poly(meth)acrylat-Plastisolen, welche monomodale Bindemittel enthalten, d. h. als Bindemittel Poly (meth)acrylate umfassen, die eine monomodale Verteilung der Partikelgröße besitzen, sinkt bei gleichem Bindemittelgehalt die Viskosität der Plastisolpasten deutlich. Das Verarbeitungsspektrum vergrößert sich und der Freiraum zur Formulierung mit Hilfskomponenten, wie z. B. zur Brandschutzausrüstung oder dergleichen, steigt dadurch.

- Verglichen mit Poly(meth)acrylat-Plastisolen, welche monomodale Bindemittel enthalten, steigt bei gleichem Bindemittelgehalt die Lagerstabilität erfindungsgemäßer Poly(meth)acrylat-Plastisole mit bi- oder multimodalem Bindemittel signifikant an. Dadurch können Produkte gemäß der Erfindung auch für Anwendungen Einsatz finden, bei denen das Plastisol vor dem Verarbeiten länger gelagert werden muß.

- Der Bindemittelgehalt kann deutlich erhöht werden. Während nach dem Stand der Technik ein Bindemittelgehalt von 100 Teilen Bindemittel auf 150 Teile Weichmacher üblich ist, gelingt es mit erfindungsgemäßen Plastisolen Produkte herzustellen, die über ein Verhältnis von 100 Teilen Bindemittel zu 50 Teilen Weichmacher verfügen. Mit Bindemitteln nach dem Stand der Technik ist eine Präparation dieser Pasten ohne Qualitätseinbußen nicht möglich. Es müssen beispielsweise Verdünnungsmittel oder Viskositätserniedriger wie aliphatische Kohlenwasserstoffe oder Alkylbenzole eingesetzt werden, die die Funktion von Weichmachern übernehmen können, um nach dem Stand der Technik höhere Bindemittelgehalte zu realisieren. Der höhere Bindemittelgehalt gemäß der Erfindung ohne Weichmacherersatzstoffe führt dazu, daß die Tendenz der gelierten Filme, Weichmacher auszudampfen oder gar auszuschwitzen, deutlich eingeschränkt oder gar vollkommen unterbunden wird.

- Durch den höheren Bindemittelgehalt ist es möglich, Dialkylphthalate (z.B. Dioctylphthalat, Diisononylphthalat, etc.) für Poly(meth)acrylat-Plastisole, vorzugsweise PMMA-Plastisole, zu verwenden, ohne daß diese zu einer Phasenseparation im gelierten Zustand führen. Durch den Einsatz dieser preiswerten und wohlfeilen Weichmacher gelingt es, das Gesamtprodukt bestehend aus Bindemittel und Weichmacher für den Verarbeiter deutlich günstiger und einfacher zu gestalten.

- Durch den höheren Bindemittelgehalt geling es zudem, gelierte Filme zu erhalten, die verglichen mit Produkten nach dem Stand der Technik eine signifikant bessere Mechanik besitzen. So steigt beispielsweise die Reißfestigkeit der Filme.

- Das Eigenschaftsspektrum erfindungsgemäßer Plastisole weist eine große Ausgewogenheit und insbesonders Verbesserungen hinsichtlich einer Kombination von Lagerstabilität, Weichmacherverträglichkeit mit einem erhöhten Bindemittelgehalt bei den Plastisolen und einer verbesserten Mechanik daraus hergestellter Filme auf.

- Plastisole nach der Erfindung verfügen über ein breites und universelles Spektrum von Einsatzmöglichkeiten. Die erfindungsgemäßen Plastisole sind für sämtliche Anwendungen geeignet, wie sie für PMMA-Plastisole vorgezeichnet sind. Dies betrifft im besonderen Anwendungen im Bereich Textil- und Gewebebeschichtungen und Schaumanwendungen (Tapeten, Fußböden).

- Im Vergleich zu bekannten PMMA-Plastisolen mit bimodaler Partikelgrößenverteilung (vgl. D4) besitzen erfindungsgemäße Plastisole eine deutlich verbesserte Eigenschaftscharakteristik. Gemäß D4 werden essentiell relativ große Suspensionspolymerisate (SP) als Extender für Emulsionspolymerisate (EP) eingesetzt. So handelt es sich bei den Beispielen 1 und 2 aus D4 um EP's (Verwendung von Ammoniumpersulfat als Initiator), während Beispiel 3 der D4 eine Perle (SP) beschreibt. Dadurch jedoch besitzen Plastisole gemäß D4 eine schlechtere Gelierfähigkeit. Große Partikel benötigen zum Gelieren mehr Energie (Temperatur, Zeit). Unter vergleichbaren Bedingungen von Temperatur und Zeit ist die Gelierung nicht vollständig, was zu Oberflächenstörungen bei den Filmen führt.

- Im Vergleich zu PMMA-Plastisolen mit bimodaler Teilchengrößenverteilung wird ebenfalls eine Steigerung des Bindemittelgehaltes der erfindungsgemäßen Plastisole erreicht und zwar unter Verzicht auf "Verdünner" wie Naphtha, Derivate des Polyglykols, Alkylbenzolen und ähnlich wirkenden Substanzen. Der Verzicht auf solche Zusätze ist von Vorteil, weil diese beim Gelieren abgesondert werden oder aus dem gelierten Produkt ausschwitzen können.

- Höhere Bindemittelgehalte unter Verzicht auf "Verdünner" bewirken auch wesentliche Verbesserungen im Bezug auf den E-Modul von resultierenden Filmen.

Bei den Polymerisaten und/oder Copolymerisaten, die als Bindemittel oder als Bestandteil des Bindemittels in den Poly(meth)acrylat-Plastisolen gemäß der Erfindung einsetzbar sind, handelt es sich a) um Emulsionspolymerisate mit b) bimodaler oder multimodaler Verteilung der Partikelgröße. Sofern im Stand der Technik bimodal verteilte Poly(meth)acrylat-Plastisole bekannt waren, handelte es sich ausschließlich um Mischungen von Polymerpulvern, von welchen wenigstens eines auf andere Weise hergestellt wurde, als auf dem Wege der Emulsionspolymerisation. So offenbart der Stand der Technik lediglich Mischungen aus Emulsions- und Suspensionspolymerisaten, welche, was bereits einleitend erwähnt wurde, deutlich größere Teilchengrößen aufweisen und als erheblich billigere Rohstoffe zur Streckung der teuren Emulsionspolymerisate Verwendung fanden.

Eine bi-, mehr- oder multimodale Verteilung der Primärteilchengrößen des Poly(meth)acrylats im Sinne der Erfindung liegt dann vor, wenn eine Probe des als oder im Bindemittel eingesetzten Polymers bei einer Analyse nach der PIDS-Methode mit dem Laserpartikelanalysator Coulter LS230 unter Berücksichtigung der optischen Parameter der Partikel und der Suspensionsflüssigkeit (mindestens) zwei Peaks im Verteilungsspektrum aufweist. Insbesonders wird bei Bestimmung der Partikelgrößenverteilung die Größenverteilung von Primärteilchen in Dispersionen zugrundegelegt. Nach Trocknung der Dispersion oder der Dispersionen können die Primärteilchen aus der Dispersion zu Sekundärteilchen mit einer anderen Teilchengrößenverteilung agglomeriert sein. Dies hat jedoch auf die Wirkung des Bindemittels und im Bezug auf die Eigenschaften des Plastisols und daraus erhältlicher Produkte keinen wesentlichen negativen Einfluß.

Die bi- oder multimodalen Emulsionspolymerisate und/oder -copolymerisate des Poly(meth)acrylats lassen sich grundsätzlich durch Emulsionspolymerisation von Monomeren zu Polymerisaten mit bi- oder multimodaler Partikelgrößenverteilung erhalten oder durch Mischen von zwei oder mehr geeigneten monomodalen Emulsionspolymerisaten, die sich hinsichtlich der Partikelgrößenverteilung unterscheiden. Bei den monomodalen Emulsionspolymerisaten wiederum kann es sich um Polymerisate handeln, die unmittelbar durch Emulsionspolymerisation erhalten werden, es können aber auch Fraktionen von Emulsionspolymerisaten eingesetzt werden, die beispielsweise durch Abtrennung, zum Beispiel in einem Siebvorgang, aus einem Emulsionspolymerisat erhalten wurden.

Eine bevorzugte Variante zum Erhalt eines bi- oder multimodalen Poly(meth)acrylat-Bindemittels (bimodale oder multimodale Dispersion) für ein erfindungsgemäßes Plastisol sieht somit das Mischen von zwei oder mehr monomodal verteilten Dispersionen vor. Anschließend kann die Dispersionsmischung auf an sich bekannte Weise getrocknet werden, beispielsweise durch Sprühtrocknung, um so das Bindemittel zu isolieren. Alternativ kann es von Vorteil sein, durch geeignete Wahl von unterschiedlichen Saatlatices die benötigte Dispersion mit Teilchen von bioder multimodaler Größenverteilung durch Aufwachsen von Monomer auf die unterschiedlichen Saatlatices direkt herzustellen. Aufgrund der höheren Reproduzierbarkeit ist allerdings das Mischen von monomodalen Dispersionen deutlich bevorzugt. Die Mischung der Dispersionen kann zum Erhalt der Polymerisate und/oder Copolymerisate z. B. sprühgetrocknet werden. Auch andere Möglichkeiten, Partikel aus Dispersionen zu isolieren, kommen selbstverständlich in Frage. Daneben können auch isolierte Polymerisate / Copolymerisate aus monomodalen Dispersionen gemischt werden.

Im deutlichen Gegensatz zum Stand der Technik, welcher bimodale Poly(meth)acrylatplastisole umfaßt, bei welchen der Anteil (Massen- oder Gewichtsprozent) an kleineren Partikeln höher ist als der Anteil an größeren Partikeln, hat sich in bezug auf die vorliegende Erfindung überraschend herausgestellt, daß sich mit einem relativ höheren Massen- oder Gewichtsanteil an größeren Partikeln eine deutliche Verbesserung der Eigenschaften des erfindungsgemäßen Plastisols und daraus hergestellter Formkörper oder Folien erzielen läßt. So wird gemäß dem Stand der Technik durch Strecken von Emulsionspolymerisaten mit Suspensionspolymerisaten eine Erhöhung der mittleren Teilchengröße des Bindemittels praktiziert. Im Gegensatz hierzu wird gemäß der Erfindung die mittlere Teilchengröße von

Emulsionspolymerisaten in Mischung erniedrigt. Dies bringt eine vergrößerte Oberfläche und trotzdem unerwartet eine Verringerung der Viskosität des Plastisols.

In einer zweckmäßigen Ausgestaltung der Erfindung kennzeichnet sich das Plastisol dadurch, daß das Verhältnis des Gewichts der Partikel einer ersten Mode der Verteilung der Primärpartikelgröße mit kleinerem mittleren Teilchendurchmesser zum Gewicht der Partikel einer zweiten Mode der Größenverteilung der Primärpartikel mit größerem mittleren Teilchendurchmesser kleiner als eins ist.

Auch hinsichtlich der mittleren Teilchengrößen der Primärpartikel des Bindemittels bestehen für die Erfindung besonders zweckmäßige Bereiche. Besonders günstige Plastisole gemäß der Erfindung sind solche, in welchen Bindemittel enthalten sind, bei denen der mittlere Teilchendurchmesser einer ersten Mode der Verteilung der Primärpartikelgrößen im Bereich zwischen 50 und 500 nm ist, während der mittlere Teilchendurchmesser einer zweiten Mode der Größenverteilung der Primärpartikel im Bereich zwischen 600 und 2000 nm ist. In diesen Teilchengrößenbereichen treten die erfindungsgemäß erwünschten Eigenschaften besonders ausgeprägt hervor.

Besonders günstige Plastisole gemäß der Erfindung sind auch solche, in welchen Bindemittel enthalten sind, bei denen der mittlere Teilchendurchmesser einer ersten Mode der Verteilung der Primärpartikelgrößen im Bereich zwischen 100 und 600 nm ist, während der mittlere Teilchendurchmesser einer zweiten Mode der Größenverteilung der Primärpartikel im Bereich zwischen 800 und 1500 nm ist. In diesen Teilchengrößenbereichen treten die erfindungsgemäß erwünschten Eigenschaften besonders ausgeprägt hervor und die angestrebten Teilchengrößenbereiche für die Moden sind einfacher realiserbar.

Von allerhöchstem Interesse sind solche Plastisole mit Bindemitteln, bei denen der mittlere Teilchendurchmesser einer ersten Mode der Größenverteilung der Primärpartikel im Bereich zwischen 100 und 250 nm ist, während der mittlere Teilchendurchmesser einer zweiten Mode der Größenverteilung der Primärpartikel im Bereich zwischen 800 und 1200 nm ist.

Wie bereits angedeutet, kann das erfindungsgemäße Plastisol bi- oder multimodale Bindemittel aufweisen. Hiervon sind allerdings bimodale Bindemittel deutlich hervorzuheben. Die Verbesserungen, welche sich mit tri- oder multimodalen Bindemitteln erzielen lassen, sind unter Umständen nicht unerheblich, allerdings ist der Aufwand im allgemeinen auch erheblich größer. Eine bevorzugte Ausführungsform der Erfindung ist daher dadurch gekennzeichnet, daß das im Plastisol als Bindemittel enthaltene Polymerisat und/oder Copolymerisat eine bimodale Größenverteilung der Primärpartikel aufweist.

Bei bimodalen Ausführungsformen lassen sich besonders signifikante Effekte dadurch erzielen, daß der mittlere Durchmesser der großen Latexpartikel mindestens um den Faktor 4, besser um den Faktor 6 bis 10, größer ist als der mittlere Durchmesser der kleinen Latexpartikel, jeweils bestimmt als Primärpartikeldurchmesser in Dispersion.

Noch günstigere Eigenschaften ergibt die Kombination großer und kleiner Latexpartikel in einem bestimmten Gewichtsoder Massenverhältnis. Mischungen von ca. 60 bis 80% großen Teilchen und entsprechend 40 bis 20% der kleinen Teilchen haben sich als vorteilhaft erwiesen. Besonders bevorzugt ist das Gebiet um 70 bis 75% der großen und 30 bis 25% der kleinen Partikel, bezogen auf das Gesamtgewicht oder die Gesamtmasse des Bindemittels.

Für den Fall einer bimodalen Verteilung der Partikelgrößen des Bindemittels sind solche Plastisole bevorzugt, bei denen das Verhältnis des Gewichts der Primärpartikel der ersten Mode zum Gewicht der Primäpartikel der zweiten Mode 1 : = 19 bis 1 : 1,22 ist. Ein ausgesprochen vorteilhaftes Plastisol zeichnet sich dadurch aus, daß das Verhältnis des Gewichts der Primärpartikel der ersten Mode zum Gewicht der Primäpartikel der zweiten Mode 1 : 3 bis 1 : 1,86 ist.

Eine weitere Verbesserung der Eigenschaften erfindungsgemäßer Plastisole läßt sich unter anderem auch durch das Molekulargewicht der eingesetzten Bindemittelpolymere erzielen. Eine bevorzugte Variante sieht vor, daß das Gewichtsmittel des Molekulargewichts $\overline{M_W}$ der Polymerisate und/oder Copolymerisate der (Meth)acrylate >2.000.000 g/mol ist. Hierdurch kann es äußerst vorteilhaft gelingen, noch lagerstabilere Plastisole mit einer noch geringeren Viskosität herzustellen. Die Verwendung von Polymerisaten und/oder Copolymerisaten von (Meth)acrylaten mit relativ hohen Molekulargewichten und damit mit relativ langen Ketten der Polymeren führt unerwartet zu einer Erniedrigung der Viskosität der Plastisole.

Unter normalen Umständen führt eine Erhöhung der Molekulargewichte bzw. Kettenlängen bei Lösungen oder Emulsionen von Polymeren zudem zu einer schnelleren Entmischung und damit zu schlechterer Lagerstabilität. Wider Erwarten steigt die Lagerstabilität der Plastisole bei Erhöhung der Kettenlängen der Polymere jedoch an. Bei Plastisolen, die Bindemittel mit hohem Molekulargewicht enthalten, wird eine wesentlich geringere Entmischungstendenz beobachtet wie bei Plastisolen mit Polymerisaten des Standes der Technik.

Besonders vorteilhafte Eigenschaften der Plastisole erhält man, wenn das Gewichtsmittel des Molekulargewichts $\overline{M_W}$ der Polymerisate und/oder Copolymerisate des eingesetzten (Meth)acrylats in den Plastisolen >3.000.000 g/mol ist.

Bevorzugt werden in den erfindungsgemäßen Plastisolen (Meth)acrylate eingesetzt, worin der Rest $R_2$ des (Meth)acrylats der Formel I einen linearen oder verzweigten ($C_1$-$C_8$)-Alkylrest umfaßt. Hiervon wiederum ist der Methylrest für $R_2$ besonders geeignet.

Die Schreibweise "(Meth)acrylat" bedeutet im Rahmen der Erfindung Acrylat und/oder Methacrylat.

Das Gewichtsmittel des Molekulargewichts $\overline{M_W}$ eines Polymeren wird für die Zwecke der Erfindung mittels SEC oder GPC (size exclusion chromatography oder gel permeations chromatography) gegenüber Standards aus Polystyrol bestimmt. Die SEC oder GPC sind dem Polymerfachmann bekannte Analysenmethoden zur Bestimmung der Mittelwerte des Molekulargewichts.

Eine weitere im Rahmen der Erfindung anwendbare Größe zur Kennzeichnung der Molmasse der eingesetzten Polymerisate und/oder Copolymerisate ist die Viskositätszahl VZ. Die Viskositätszahl wird in Anlehnung an DIN 51 562 Teil 1 und 3 (Stand Januar 1983 bzw. Mai 1985), nach DIN 7745 Teil 2, Anhang A bis C, Stand April 1989 bestimmt.

Erfindungsgemäße Plastisole enthalten somit in bevorzugter Ausführungsform Polymerisate und/oder Copolymerisate mit VZ ≥ 300, vorzugsweise > 300, zweckmäßig > 600, besonders bevorzugt > 900, ganz besonders bevorzugt > 1200.

Unter linearen oder verzweigtem ($C_1$-$C_{18}$)-Alkylrest versteht sich ein Umfang an Alkylresten, der angefangen bei Methyl- über Ethyl- bis hin zu einem 18-C-Atome umfassenden Radikal reicht. Mitumfaßt sind auch sämtliche Bindungsisomere, welche innerhalb der Gruppe denkbar sind.

Unter von A) und B) verschiedenen Monomere versteht der Fachmann Styrol und seine Derivate, Vinylester wie z. B. Vinylacetat, Vinylpropionat, Vinylester höherer Alkylsäuren, Maleinsäureanhydrid, Itaconsäure und seine Ester, Olefine wie z. B. Ethen, Propen, Isobuten etc.

Unter den haftungsverbessernden Monomeren als Bestandteile der Polymeren seien solche radikalisch polymerisierbaren Monomeren verstanden, welche funktionelle Gruppen besitzen, die mit den Materialien, die beschichtet werden sollen, in Wechselwirkung treten können. Eine derartige Wechselwirkung kann z. B. durch Wasserstoffbrükkenbildung, Komplexierung, Dipolkräfte u. ä. zustande kommen, an denen in der Regel Heteroatome wie Stickstoff oder Sauerstoff beteiligt sind. Genannt seien als funktionale Gruppen die Amino-, insbesondere die Dialkylamino-, (cyclische) Amid-, Imid-, Hydroxy-, Oxy-, Carboxyl-, Cyano-Gruppe. Derartige Monomere sind an sich bekannt (vgl. H. Rauch Puntigam, Th. Völker, Acryl- und Methacrylverbindungen, Springer-Verlag 1967; Kirk-Othmer, Encyclopedia of Chemical Technology, 3rd. Ed., Vol. 2, pp. 394-400, J. Wiley 1978; DE-A 25 56 080; DE-A 26 34 003).

Vorzugsweise gehören die haftungsverbessernden Monomeren daher der Monomerklasse der stickstoffhaltigen Vinylheterocyclen mit vorzugsweise 5-Ringen neben 6-Ringen, und/oder der copolymerisierbaren vinylischen Carbonsäuren und/oder der Hydroxyalkyl-, Alkoxyalkyl- und der Aminoalkyl-substituierten Ester oder Amiden der Acryl- und Methacrylsäure an.

Als Stickstoff-heterocyclische Monomere seien insbesondere solche aus der Klasse der Vinylimidazole, der Vinyllactame, der Vinylcarbazole und der Vinylpyridine genannt. Beispiele, die keinerlei Beschränkung darstellen sollen, für diese monomeren Imidazolverbindungen sind N-Vinylimidazol (auch Vinyl-1-imidazol genannt), N-Vinyl-methyl-2-imidazol, N-Vinyl-ethyl-2-imidazol, N-Vinyl-phenyl-2-imidazol, N-Vinyl-dimethyl-2,4-imidazol, N-Vinylbenzimidazol, N-Vinylimidazolin (auch vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5,5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allylcaprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)carbazol. Unter den copolymerisierbaren vinylischen Carbonsäuren seien insbesondere die Acryl- und die Methacrylsäure bzw. geeignete Salze derselben genannt.

Ferner seien die folgenden oxy- bzw. alkoxysubstituierten Alkylester der (Meth)acrylsäure angeführt:

2-Hydroxyethyl(meth)acrylat, Hydroxypropyl(meth)acrylat, 2-Methoxy-ethyl(meth)acrylat, 2-Ethoxyethyl(meth) acrylat, 2-Butoxyethyl(meth)acrylat, 2-(2-Butoxyethoxy)ethylmethacrylat, 2-(Ethoxyethyloxy)ethyl(meth)acrylat, 4-Hydroxybutyl(meth)acrylat, 2-[2-(2-Ethoxy-ethoxy)ethoxy)ethyl(meth)acrylat, 3-Methoxybutyl-1-(meth)acrylat, 2-Alkoxymethylethyl(meth)acrylat,
2-Hexoxyethyl(meth)acrylat.

Weiterhin seien die folgenden aminsubstituierten Alkylester der (Meth)acrylsäure genannt:

2-Dimethylaminoethyl(meth)acrylat, 2-Diethylaminoethyl(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)-acrylat, 2-tert.-Butylaminoethyl(meth)acrylat, 3-(Dimethylamino)propyl(meth)acrylat, 2-(Dimethylaminoethoxyethyl)-(meth)acrylat.

Als Vertreter der (Meth)acrylamide seien beispielsweise die folgenden Monomeren genannt:

N-Methyl(meth)acrylamid, N-Dimethylaminoethyl(meth)-acrylamid, N-Dimethylaminopropyl(meth)acrylamid, N-Isopropyl(meth)acrylamid, N-tert.-Butyl(meth)acrylamid, N-Isobutyl(meth)acrylamid, N-Decyl(meth)acrylamid, N-Cyclohexyl(meth)acrylamid, N-[3-(Dimethylamino)2,2-dimethylpropyl]-methacrylamid, N-[2-Hydroxyethyl](meth)acrylamid.

Die erfindungsgemäßen Plastisole enthalten an sich bekannte Weichmacher in den dafür üblichen Mengen, beispielsweise für die PMMA-Plastisole (aber auch für PVC-Plastisole) üblichen Weichmacher, insbesondere Phthalsäureester, daneben Adipinsäure- und/oder Sebacinsäureester, chlorierte Paraffine, Trialkylphosphate, aliphatische oder araliphatische Polyester sowie sonstige polymere Weichmacher wie z. B. Harnstoffweichharze. (Vgl. H. K. Felger, Kunststoff-Handbuch Bd. 1/1C, Hanser-Verlag 1985 sowie in H. F. Mark et al. Encyclopedia of Polymer Science and Engineering, Supplemental Volume pg. 568-647, J. Wiley 1989). Eine Auswahl geeigneter Weichmacher kann auch der DE-C 25 43 542 entnommen werden. Vorzugsweise kommen Weichmacher bzw. Weichmacherkombinationen in Frage, die bei einer Lagerzeit der konfektionierten Plastisole über 3 Wochen bei 30 °C einen Viskositätsanstieg unter dem zehnfachen speziell unter dem fünffachen Wert der Ausgangsviskosität ergeben. Besonders erwähnt seien das Dioctylphthalat, Diisodecylphthalat, Diethylhexylphthalat, Di-$C_7$-$C_{11}$-n-alkylphthalat, Trikresylphosphat, Dibenzyltoluol (LIPINOL®T, Produkt der Fa. Hüls AG), 2,2,4-Trimethyl-1,3-pentandioldibenzoat (Benzoflex® 354, Produkt der Firma Velsicol) und Benzyloctylphthalat.

Weiterhin enthalten die Plastisole gewöhnlich noch an sich bekannte anorganische Füllstoffe in Mengen bis zu 700 Gew.-Teilen. Genannt seien beispielsweise Calciumcarbonat (Kreide), Titandioxid, Calciumoxid, Perlit, gefällte und gecoatete Kreiden als rheologisch wirksame Additive, ferner ggf. Thixotropierungsmittel wie z. B. pyrogene Kieselsäure. Die Korngröße liegt meist im Bereich 5 bis 25 µm. Die Plastisole können anwendungsbedingt noch an sich bekannte Hilfsstoffe wie Haftvermittler, Netzmittel, Stabilisatoren, Verlaufsmittel, Treibmittel in Anteilen von 0 bis 5 Gew.-% (bezogen auf die Plastisole) enthalten.

Erwähnt sei z. B. Calciumstearat als Verlaufsmittel.

Die erfindungsgemäßen Plastisole sind für sämtliche Anwendungen geeignet, wie sie für PVC- oder PMMA-Plastisole vorgezeichnet sind. Als solche kommen insbesondere in Betracht Laufschichten für Bodenbeläge, freie transparente Folien, KFZ-Unterbodenschutz, Korrosionsschutz für Metalle, Zwischenschichten für Bodenbeläge (geschäumt), Tapeten, Kunststoff-Planen, Autohimmel, Armaturenbrettverkleidungen, Kronkorken.

Gegenstand der Erfindung ist auch ein Verfahren zur Herstellung von Plastisolen, bei welchem man die Komponenten I, II und III, sowie gegebenenfalls weitere an sich bekannte Zusätze geeignet miteinander mischt, wobei sich das Verfahren der Erfindung dadurch auszeichnet, daß man Emulsionspolymerisate und/oder -Copolymerisate mit einer bi- oder multimodalen Größenverteilung der Primärpartikel einsetzt. Bevorzugt werden als Komponente I zwei vorher getrocknete und gemischte Dispersionen mit jeweils monomodaler Größenverteilung der Primärpartikel eingesetzt, wobei die Peakmaxima der einzelnen Moden zu unterschiedlichen Größen der Partikel korrespondieren.

Die Herstellung polymerer (Meth)acrylate mit relativ kleinen Partikelgrößen auf dem Wege der Emulsionspolymerisation für den Einsatz in Plastisolen ist bekannt. So ist beispielsweise zu diesem Zweck das "Saatlatexverfahren" bekannt. Hierbei ist von machbaren Größen der Partikel im Bereich von etwa kleiner 1000 nm auszugehen. Bislang nicht bekannt war es auf dem Wege der Emulsionspolymerisation auf der Basis von Poly(meth)acrylaten, vorzugsweise PMMA, Primärteilchen mit einer Größe zu erzeugen, die für die bevorzugten Bereiche der Erfindung geeignet sind. Insbesonders und gerade auch in einem technisch akzeptablem Verfahren.

Daher war es des weiteren wünschenswert, ein Verfahren zur Verfügung zu stellen, das es gestattet, die für bevorzugte Varianten der Erfindung notwendigen Teilchen in einem technisch brauchbaren Verfahren herzustellen.

Dies läßt sich dadurch erreichen, daß man bei einem an sich bekannten Verfahren zur Herstellung von Polymerisaten und/oder Copolymerisaten von (Meth)acrylaten durch Emulsionspolymerisation in die Dosierleitung, aus welcher die Monomeren zugeführt werden, oder in den Reaktor selbst ein Dispergierwerkzeug schaltet.

Durch Kombination eines Emulsionszulaufverfahrens mit einem Saatlatexverfahre, wobei der Emulsionszulauf direkt vor dem Eintritt in den Reaktor oder unmittelbar im Reaktor feinst emulgiert wird, gelingt es es die für ein Saatlatexverfahren von (Meth)acrylatmonomeren übliche lange Reaktionszeit auf ein technisch akzeptables Maß so zu kürzen, daß ein Minimum an Koagulat und Reaktorverunreinigung auftritt.

Die Strecke, welche von der Zulaufemulsion zwischen dem Ort der Dispergierwirkung und dem Ort der Reaktion zurückzulegen ist, soll dabei möglichst gering sein. Bevorzugt ist das Dispergierwerkzeug unmittelbar am Reaktoreinlaß in der Monomerdosierleitung angeordnet.

Die spezielle Ausgestaltung des Dispergierwerkzeuges ist beliebig, solange die erwünschte Wirkung erreicht wird, nämlich eine möglichst feine Verteilung der Monomertröpfchen vor dem Zulauf zur Dispersion in Polymerisationsgefäß. Unter "möglichst fein" wird in diesem Zusammenhang eine Eigenschaft verstanden, die sich ergibt, wenn z. B. in den Zulauf einer 5-Liter-Apparatur eine Ultraschalldurchflußzelle mit einem Fassungsvermögen von 5 mL, bei

einer Durchflußgeschwindigkeit von 10 bis 40 mL/min, eine Leistung von 20 bis 50 Watt eingebracht wird (Ultraschallgerät UP50 H der Fa. Hielscher GmbH). Weiterhin soll eine Emulsion, die wie in Beispiel 4 beschrieben behandelt wird, als "möglichst fein" im Sinne der Erfindung gelten.

Bewährt haben sich Dispergierwerkzeuge, die eine Zerkleinerung der Tröpfchen auf mechanischem Wege ermöglichen. Hierzu gehören rotierende Werkzeuge und ähnliche Anordnungen. Ebenfalls von Vorteil sind Dispergatoren, die nach dem Prinzip des Ultraschalls funktionieren.

Auf die geschilderte Art und Weise lassen sich auch auf dem Wege der Emulsionspolymerisation Latices von Poly(meth)acrylaten erhalten, deren mittlerer Teilchendurchmesser 1000 nm oder mehr beträgt. Dies ist nach dem Saatlatexverfahren für (Meth)acrylatmonomere bislang nicht möglich gewesen.

Durch die Maßnahme der Erfindung, nämlich, bevorzugt direkt vor dem Eingang die zuzudosierende Emulsion sehr fein zu emulgieren, gelingt es, daß die Monomertröpfchen der Emulsion sehr fein werden, obwohl nur eine sehr niedrige Emulgatorkonzentration verwendet wird. Die kleine Tröpfchengröße führt zu einer hohen spezifischen Oberfläche und einem sehr viel schnelleren Austritt des Monomers in die Wasserphase, wie sie für eine Emulsionspolymerisation notwendig ist. Das zudosierte Monomer tritt schneller in die Latexteilchen ein und wird dort polymerisiert. Bei gleicher Dosierleistung wird das Monomer nach diesem Verfahren sehr viel schneller polymerisiert und sammelt sich nicht im Reaktionsbehälter an. Dies erkennt man zum einen daran, daß der Wärmestrom während der Reaktion nach diesem Verfahren höher ist als ohne die Emulgierung vor dem Reaktoreingang. Zum anderen tritt ohne die Emulgierung am Ende der Reaktion eine starke Nachreaktion auf - das akkumulierte Monomer reagiert, was sich durch einen deutlichen Temperaturanstieg des Mediums bemerkbar macht. Dies tritt beim Verfahren der Erfindung nicht auf.

Ein weiterer Vorteil des Verfahrens der Erfindung besteht darin, daß die bei einem Saatlatexverfahren üblicherweise sehr starke Koagulatbildung nicht auftritt. Der Koagulatgehalt ist bei erfindungsgemäßen Dispersionen in der Regel nicht meßbar. Zudem ist die Reaktorverunreinigung nach dem Verfahren der Erfindung deutlich geringer als nach Verfahren nach Stand der Technik.

Grundsätzlich eignen sich die vorstehend angegebenen Monomere, insbesondere Methylmethacrylat, ggf. auch die Monomeren der Gruppe B, zur Herstellung von Kern-Schale-Polymerisaten.

Der Aufbau der Polymerisate und/oder Copolymerisate aus einem Kernmaterial und einem Schalenmaterial wird in an sich bekannter Weise durch eine bestimmte Verfahrensweise bei der Emulsionspolymerisation erhalten. Dabei werden die das Kernmaterial bildenden Monomeren in wäßriger Emulsion in der ersten Verfahrensstufe polymerisiert. Wenn die Monomeren der ersten Stufe im wesentlichen auspolymerisiert sind, werden die Monomerbestandteile des Schalenmaterials unter solchen Bedingungen zu dem Emulsionspolymerisat zugegeben, daß die Bildung neuer Teilchen vermieden wird. Dadurch wird das in der zweiten Stufe entstehende Polymerisat schalenförmig um das Kernmaterial herum gelagert.

In der ersten Polymerisationsstufe, in der das Kernmaterial entsteht, werden 0,01 bis 3 Gew.-%, bezogen auf das Monomer an anionischen, kationischen oder nicht-ionischen Emulgiermitteln, wie Natriumlaurylsulfat, Alkylbenzolsulfonate, Oxäthylierungsprodukte alkylierter Phenole oder deren neutralisierte Sulfierungsprodukte, verwendet. Die Polymerisation wird vorzugsweise bei Temperaturen zwischen 60 und 100 °C mit Hilfe wasserlöslicher Radikälbildner, wie Kalium- oder Ammoniumpersulfat oder Wasserstoffperoxyd, ausgelöst. Vor Beginn der zweiten Polymerisationsstufe kann erneut Initiator zugesetzt werden, jedoch wird wenig oder gar kein zusätzliches Emulgiermittel in der Zweiten Stufe verwendet.

Beispiele:

Die Beispiele beschreiben lediglich die Synthese von reinen PMMA-Polymeren. Diese sind nicht ausschließend zu verstehen. Der Einsatz von Comonomeren wie oben beschrieben versteht sich für den Fachmann von selbst. Durch die Comonomerwahl können bestimmte Anforderungen der Technik noch verbessert werden.

Beispiel 1:

Produkt A

In den 5L Reaktor einer Apparatur (Rührer, Rückflußkühler, Dosierpumpe, Wasserbad, Stickstoffatmosphäre) wird 1383g VE (voll entsalztes) Wasser gegeben. Diese Vorlage wird unter Rühren durch das Wasserbad auf eine Innentemperatur von 73°C-75°C gebracht.

In einer ersten Dosierung von ca. 1- 10 Minuten wird eine Emulsion folgender Zusammensetzung, die unter Stickstoffatmosphäre hergestellt wurde, zur Vorlage gegeben: 141g VE- Wasser; 4,4g Disponil SUS IC 875 Di-2-ethylhexylsulfosuccinat, Natriumsalz (Hersteller: Henkel KGaA); 328,8g Methylmethacrylat; 0,3 mL Natriumhydrogensulfit 5%ige Lsg.. Anschließend wird in den Rektor ein Redox-System (2,3 mL Natriumperoxodisulfat 5%ige Lsg.; 1,5 mL Natriumhydrogensulfit 5%ige Lsg.)zugegeben, das die Polymerisation einleitet. Einem Anstieg von über 75°C - 77°C

ist durch eine Kühlung des Reaktors vorzubeugen.

Ist darauf folgend ein stärkerer Abfall der Innentemperatur durch eine fast vollständige Abreaktion der 1. Dosierung zu erkennen, wird eine zweite Emulsion folgender Zusammensetzung, die ebenfalls unter Stickstoffatmosphäre hergestellt wurde, innerhalb von 1- 10 Minuten zudosiert: 140,9g VE Wasser; 4,4g Disponil SUS IC 875; 328,6g Methylmethacrylat; 0,32mL Natriumhydrogensulfit 5%ige Lsg.. Auch hier ist ein zu starker Temperaturanstieg von über 75°C- 77°C zu vermeiden.

Fällt die Innentemperatur nach der fast vollständigen Abreaktion abermals sichtlich, wird die dritte Emulsion folgender Zusammensetzung (unter Stickstoffatmosphäre hergestellt) mit einer Dosiergeschwindichkeit von 55,4g/ Minute zugesetzt: 748,1g VE Wasser; 23,2g Disponil SUS IC 875; 1745g Methylmethacrylat; 1,68mL Natriumhydrogensulfit 5%ige Lsg.. Eine eingesetzte Polymerisation der letzten Dosierung erkennt man an einem leichten Anstieg der Innentemperatur auf etwa 74°C- 77°C nach 5 - 20 Minuten. Die Innentemperatur während dieser Dosierung ist , ggf. durch Kühlung, auf ca. 75°C zu halten. Nach der vollständigen Zugabe der Emulsion wird eine Nachreaktionszeit von 30 Minuten bei einer Wasserbadtemperatur von 75°C eingehalten. Das Produkt wird auf Raumtemperatur abgekühlt und über eine Gaze 125µm filtriert.

Produkt A:

$$VZ = \eta_{sp/c} = 995\ cm^3/g$$

Primärteilchengröße: 198 nm (5% < 130nm; 5% > 280 nm)

Die Primärteilchengröße und ihre Verteilung wird mit einem auf Laserbeugung basierenden Gerät bestimmt (Coulter LS230).
Feststoffgehalt: 48,3 %

Beispiel 2:

Produkt B

wie Beispiel 1. Durch Erhöhung der Emulgatorkonzentration wird die Teilchengröße auf ca. 160 nm eingestellt.

$$VZ = \eta_{sp/c} = 928\ cm^3/g$$

Primärteilchengröße: 158 nm (Coulter LS230) (5% < 110nm; 5% > 210 nm)
Feststoffgehalt: 48,7 %

Beispiel 3:

Produkt C

wie Beispiel 1. Durch Erhöhung der Emulgatorkonzentration wird die Teilchengröße auf ca. 100 nm eingestellt.

$$VZ = \eta_{sp/c} = 1125\ cm^3/g$$

Primärteilchengröße: 100 nm (Coulter LS230)(5% < 60nm; 5% > 140 nm)
Feststoffgehalt: 48,7 %

Beispiel 4

Produkt D

Produkt D wird nach einem Saatlatexverfahren in einem 1000-L-Reaktor hergestellt.

In dem Reaktor mit Impellerrührer werden 263 L Wasser vorgelegt. 0,84 kg Produkt A (Saatlatex) werden zugegeben und der Inhalt auf 80°C erwärmt. Parallel wird eine Emulsion bestehend aus 183,6 kg Methylmethacrylat,

79 kg Wasser und 0,612 kg Disponil SUS IC 875 in einem getrennten Behälter hergestellt.
In den Reaktor werden 13,2 g Natriumperoxodisulfat und 11,2 g Natriumbisulfit gegeben. Die Rührerdrehzahl wird auf 80 UpM eingestellt. Die oben beschriebene Emulsion wird dann zunächst für 25 Minuten mit einer Geschwindigkeit von 0,9 kg/ min zudosiert. In die Dosierleitung wird ein Dispergator der Firma Ystral (Modell X40P-41G1; 2 mm Schlitzbreite) geschaltet, um die Emulsion direkt vor dem Reaktoreintritt in sehr feine Teilchen zu bringen. Nach den 25 Minuten wird die Temperatur auf 75°C heruntergenommen und über 130 Minuten mit 1,8 kg/min der Rest der Emulsion zudosiert. Kurz vor Ende der Dosierung wird die Drehzahl des Rührers auf 50 UpM eingestellt. Nach beendeter Dosierung wird 30 Minuten bei 75°C gerührt. Es tritt dabei kein Exotherm auf. Nach dem Abkühlen wird die Emulsion durch ein Gazesieb (250 mikron-Maschenweite) abgelassen. Es ist praktisch kein Koagulat vorhanden (<0,01 %) und die Reaktorwand nicht verschmutzt.

Feststoffgehalt: 33,7 %

Teilchengröße: 954 nm (monomodal)

$$VZ = \eta_{sp/c} = 693\ cm^3/g$$

Beispiel 5 (Vergleich zu Beispiel 4)

Die Reaktion wird exakt wie in Beispiel 4 durchgeführt. Allerdings wird der Dispergator aus der Dosierleitung genommen, so daß eine Feinstemulgierung direkt vor dem Reaktoreintritt nicht stattfindet.
Die Reaktion springt deutlich langsamer an und zeigt in der Nachreaktionszeit ein Exotherm - die Reaktionstemperatur steigt um 2°C an.
Es treten 0,8 % Koagulat auf und die Reaktorwand zeigt eine starke Verschmutzung nach beendeter Reaktion.
Feststoffgehalt: 32,7 %
Teilchengrößenverteilung: bimodal (400 nm und 720 nm)

$$VZ = \eta_{sp/c} = 480\ cm^3/g$$

Dieses Beispiel ist unbrauchbar zur Herstellung einer für Plastisole geeigneten bimodalen Primärteilchenverteilung.

Beispiel 6 (Vergleich zu Beispiel 4)

wie Beispiel 5, allerdings werden die Dosierzeiten verdoppelt.
Temperaturanstieg in der Nachreaktion: 0,5°C
Koagulat: 0,6 %
Starke Reaktorverunreinigung
Feststoffgehalt: 32,4 %
Primärteilchengröße: 971 nm (monomodal)

Beispiel 7 (Vergleichsbeispiel zu JP-10-298391)

Produkt E

Herstellung des Suspensionspolymerisats gemäß Referenzbeispiel 3 aus JP-10-298391)
Das Suspensionspolymerisat wurde wie unter Referenzbeispiel 3 in JP-10-298391 angegeben hergestellt. Als Initiator wurde tert.-Butylper-2-ethylhexanoat eingesetzt.
Gewichtsmittel des Molekulargewichts des erhaltenen Polymerproduktes E: 93.000 g/mol bestimmt mittels SEC (GPC) gegen Polymethylmethacrylat-Standards;
mittlere Teilchengröße: 24 µm (24.000 nm) (Coulter LS230);

Beispiel 8

Herstellung der Dispersionen mit bimodaler Primärteilchengrößenverteilung und Trocknung
Produkt D wurde mit Produkt A,B C oder E unter Erhalt der bimodalen Produkte A' - C' und E' gemischt. Das

Mischungsverhältnis bezieht sich auf den Gewichtsanteil der jeweiligen Teilchen im getrockneten Feststoff.

Die gemischten Dispersionen werden in einem Sprühtrockner, mit Zentrifugalzerstäuber getrocknet. Die Umdrehungsgeschwindigkeit des Zerstäubers beträgt 20.000 Umdrehungen/min. Die Austrittstemperatur wird auf 75°C eingestellt.

Das sprühgetrocknete Pulver (Bindemittel A' - C' sowie E') weist jeweils einen mittleren Korndurchmesser von ca. 20 mikron auf. Durch Mahlen kann der Korndurchmesser verkleinert werden, was sich in der Regel positiv auf die Produkteigenschaften auswirkt. Darauf wurde verzichtet.

Herstellung der Plastisole

Die Polymeren (Produkt A' bis C' sowie E') wurden mit Weichmacher mit Hilfe eines Dispergators in einem Verhältnis (Gewichtsverhältnis) gemischt, welches jeweils den folgenden Tabellen zu entnehmen ist. Die Plastisolmassen wurden mit Hilfe einer Rakel aufgetragen und 30 Minuten bei 140°C in einem Elektroofen geliert. Ansonsten wurden die Pasten nach der Methode hergestellt, die in ISO DIN 11 468 angegeben ist.

Untersucht wurde die Viskosität der Plastisolpasten vor der Gelierung(DIN 53018 Teil 1 und Teil 2 und DIN 53019 Teil 1) und die Weichmacherauswanderung aus dem Film. Ferner wurden Zugfestigkeit und Bruchdehnung der gelierten Filme gemessen (DIN 53455).

1. Mischungsverhältnis

| Santicizer 141 (Diphenyloctylphosphat; Solutia Inc.) | | | | |
|---|---|---|---|---|
| Brookfield-Visk. [mPas] | Produkt D : Produkt A 65:35 | Produkt D Produkt : A 70:30 | Produkt D : Produkt A 75:25 | Produkt-A (Vgl.) |
| initial | 280 | 280 | 280 | 760 |
| 1 Tag | 280 | 280 | 320 | 760 |
| 5 Tage | 320 | 320 | 320 | 1600 |
| jeweils 100 Teile Bindemittel und 150 Teile Weichmacher | | | | |

| Santicizer 261 (Benzyloctylphthalat; Solutia) | | | | |
|---|---|---|---|---|
| Brookfield-Visk. [mPas] | ProduktD : ProduktA 65:35 | Produkt D : Produkt A 70:30 | Produkt D :: Produkt A 75:25 | Produkt A (Vgl.) |
| initial | 800 | 800 | 840 | 1760 |
| 1 Tag | 920 | 960 | 1040 | 2000 |
| 5 Tage | 1000 | 960 | 1080 | 2500 |
| jeweils 100 Teile Bindemittel und 150 Teile Weichmacher | | | | |

| Santicizer 141 | | | | |
|---|---|---|---|---|
| Brookfield-Visk. [mPas] | ProduktD : ProduktA 65:35 | Produkt D : Produkt A 70:30 | Produkt D : Produkt A 75:25 | Produkt A (Vgl.) |
| initial | 480 | 480 | 480 | 1400 |
| 1 Tag | 640 | 640 | 640 | 2480 |
| 5 Tage | 2120 | 2120 | 2120 | 21200 |
| jeweils 100 Teile Bindemittel und 100 Teile Weichmacher | | | | |

| Santicizer 261 | | | | |
|---|---|---|---|---|
| Brookfield-Visk. | ProduktD : ProduktA 65:35 | Produkt D : Produkt A 70:30 | Produkt D : Produkt A 75:25 | Produkt A (Vgl.) |
| initial | 1680 | 1640 | 1600 | 4830 |
| 1 Tag | 2160 | 2080 | 2040 | 7080 |
| 5 Tage | 2640 | 2540 | 2520 | 10560 |
| jeweils 100 Teile Bindemittel und 100 Teile Weichmacher | | | | |

2. Größenverhältnis

Mischungsverhältnis große zu kleine Teilchen:
73:27
jeweils 100 Teile Bindemittel und 150 Teile Weichmacher

| Santicizer 141 | | | | |
|---|---|---|---|---|
| Brookfield-Visk. (mPas] | Produkt D : Produkt A | Produkt D : Produkt B | Produkt D : Produkt C | Produkt A (Vergl.) |
| initial | 280 | 240 | 220 | 760 |
| 1 Tag | 320 | 240 | 240 | 760 |
| 5 Tage | 320 | 280 | 240 | 1600 |

| Santicizer 261 | | | | |
|---|---|---|---|---|
| Brookfield-Visk. [mPas] | Produkt D : Produkt A | Produkt D : Produkt B | Produkt D : Produkt C | Produkt A (Vergl.) |
| initial | 840 | 800 | 1160 | 1760 |
| 1 Tag | 1040 | 880 | 1280 | 2000 |
| 5 Tage | 1080 | 960 | 1440 | 2500 |

## 3. Erhöhung Bindemittelgehalt

Weichmacher: Dioctylphthalat (Palatinol AH; BASF)
immer bezogen auf 100 Teile Bindemittel

| | Produkt D : Produkt A 73:27 100 Tl. WM | Produkt D : Produkt A 73:27 80 Tl. WM | Produkt D : Produkt A 73:27 60 Tl. WM | Vgl: Produkt A 100 Tl.WM | Vgl: Produkt A 80 Tl. WM |
|---|---|---|---|---|---|
| Brookfield initial [mPas] | 1.700 | 5.600 | 23.200 | 76.000 | Paste ist nicht herstellbar |
| Gelierung 30min/160°C | + | + | + | + | - |
| Ausschwitzen des Weichmachers | sehr gering | kein Ausschw. | kein Ausschw. | sehr gering | - |
| Reißfestigkeit | 7,0 MPa | 12,4 MPa | 23,2 MPa | 8,3 MPa | - |
| Bruchdehnung | 98 % | 67 % | 10 % | 92 % | - |

4. Versuche zum Vergleich gegen JP-10-298391

| Santicizer 141 (Diphenyloctylphosphat; Solutia Inc.) | | |
|---|---|---|
| Brookfield-Visk. [mPas] | Produkt D : Produkt E 80:20 | Produkt D : Produkt E 70:30 |
| initial | 280 | 280 |
| 1 Tag | 280 | 300 |
| 5 Tage | 300 | 300 |
| jeweils 100 Teile Bindemittel und 150 Teile Weichmacher. | | |

Es kam zu einem extrem starken Absetzen der dispergierten Partikeln im Vergleich zu den erfindungsgemäßen Beispielen aus 1.

| Santicizer 261 (Benzyloctylphthalat; Solutia) | | | | |
|---|---|---|---|---|
| Brookfield-Visk. [mPas] | Produkt D : Produkt E 80:20 | Produkt D : Produkt E 70:30 | Produkt D : Produkt A 70:30 | Produkt A (Vgl.) |
| initial | 960 | 840 | 800 | 1760 |
| 1 Tag | 1120 | 980 | 960 | 2000 |
| 5 Tage | 1350 | 1250 | 960 | 2500 |
| jeweils 100 Teile Bindemittel und 150 Teile Weichmacher. | | | | |

Es kam auch hier zu einem extrem starken Absetzen der dispergierten Partikeln, die Produkt E aufweisen, im Vergleich zu den erfindungsgemäßen Beispielen aus 1., die teilweise nochmals in der Tabelle aufgeführt sind.

| Santicizer 141 | | | | |
|---|---|---|---|---|
| Brookfieid-Visk. (mPas] | Produkt D : Produkt E 80:20 | Produkt D : Produkt E 70:30 | Produkt D : Produkt A 70:30 | Produkt A (vgl.) |
| initial | 730 | 680 | 480 | 1400 |
| 1 Tag | 850 | 780 | 640 | 2480 |
| 5 Tage | 3450 | 2980 | 2120 | 21200 |
| jeweils 100 Teile Bindemittel und 100 Teile Weichmacher. | | | | |

Auch hier setzten sich die dispergierten Partikeln ab, die Produkt E aufweisen, im Vergleich zu den erfindungsgemäßen Beispielen aus 1., die teilweise nochmals in der Tabelle aufgeführt sind.

| Santicizer 261 | | | | |
|---|---|---|---|---|
| Brookfield-Visk. | ProduktD : ProduktE 80:20 | Produkt D : Produkt E 70:30 | Produkt D : Produkt A 70:30 | Produkt A (Vgl.) |
| initial | 3500 | 2980 | 1640 | 4830 |
| 1 Tag | 4850 | 3540 | 2080 | 7080 |
| 5 Tage | 6400 | 4620 | 2540 | 10560 |
| jeweils 100 Teile Bindemittel und 100 Teile Weichmacher; | | | | |

die Ansätze, die Produkt E enthielten, zeigten kein Absetzen, allerdings sind die Viskositäten etwa um den Faktor 2 schlechter.

Gelierung der Filme:

Nach 30 Minuten bei 140°C zeigen die Filme der Vergleichsbeispiele, die Produkt E enthielten, aus den Tabellen mit Sancticizer 261 keine vollständige Gelierung. Es sind mindestens 45 Minuten bei dieser Temperatur notwendig, um einen homogenen partikelfreien Film zu erhalten. Dies ist bei erfindungsgemäßen Beispielen nicht der Fall.
Vergleich zu Punkt 3.Erhöhung Bindemittelgehalt

100 Tl. Produkt D:E = 80:20 +100 Tl. Weichmacher

Brookfield initial: 56.000 mPas
Gelierung: unvollständig
Ausschwitzen: sehr gering
Reißfestigkeit: 4,5 MPa
Bruchdehnung: 105 %

100 Tl. Produkt D:E = 80:20 +80 Tl Weichmacher Brookfield initial: Paste nicht herstellbar

100 Tl. Produkt D:E = 70:30 +100 Tl Weichmacher Brookfield initial: 46.000 mPas

Gelierung: unvollständig
Ausschwitzen: sehr gering
Reißfestigkeit: 3,8 MPa
Bruchdehnung: 113 %

100 Tl. Produkt D:E = 70:30 +80 Tl Weichmacher Brookfield initial: Paste nicht herstellbar

**Patentansprüche**

1. Plastisol aufweisend in Mischung

I. ein oder mehrere Polymerisate und/oder Copolymerisate von (Meth)acrylaten erhältlich durch Polymerisation von Zusammensetzungen enthaltend als polymerisierbare Bestandteile

A) 20 bis 100 Gew.-% Methylmethacrylat,

B) 0 bis 80 Gew.-% eines von Methylmethacrylat verschiedenen (Meth)acrylats der Formel I,

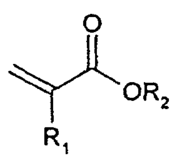

( I )

worin

$R_1$ für Wasserstoff oder Methyl und

$R_2$ für einen linearen oder verzweigten Alkylrest mit 1 bis 18 Kohlenstoffatomen steht,

C) 0 bis 40 Gew.-% eines weiteren von A) und B) verschiedenen vinylisch ungesättigten Monomeren und

D) 0 bis 40 Gew.-% eines haftungsvermittelnden Monomeren,

wobei A) bis D) 100 Gew.-% der polymerisierbaren Bestandteile ergeben,

II. auf 100 Gew.-Teile der Polymerisate und/oder Copolymerisate aus I. mit diesen verträgliche Weichmacher

in Anteilen von 5 bis 400 Gew.-Teilen und

III. auf 100 Gew.-Teile der Komponente I. anorganische Füllstoffe in Mengen von 0 bis 700 Gew.-Teilen;

**dadurch gekennzeichnet,**
**daß** die Polymerisate und/oder Copolymerisate der (Meth)acrylate Emulsionspolymerisate mit einer bi- oder multimodalen Größenverteilung der Primärpartikel sind.

**2.** Plastisol nach Anspruch 1,
**dadurch gekennzeichnet,**
**daß** das Verhältnis des Gewichts der Partikel einer ersten Mode der Verteilung der Primärpartikelgröße mit kleinerem mittleren Teilchendurchmesser zum Gewicht der Partikel einer zweiten Mode der Größenverteilung der Primärpartikel mit größerem mittleren Teilchendurchmesser kleiner als eins ist.

**3.** Plastisol nach Anspruch 1 oder 2,
**dadurch gekennzeichnet,**
**daß** der mittlere Teilchendurchmesser einer ersten Mode der Größenverteilung der Primärpartikel im Bereich zwischen 50 und 500 nm ist, während der mittlere Teilchendurchmesser einer zweiten Mode der Verteilung der Primärpartikelgrößen im Bereich zwischen 600 und 2000 nm ist.

**4.** Plastisol nach Anspruch 1 oder 2,
**dadurch gekennzeichnet,**
**daß** der mittlere Teilchendurchmesser einer ersten Mode der Größenverteilung der Primärpartikel im Bereich zwischen 100 und 250 nm ist, während der mittlere Teilchendurchmesser einer zweiten Mode der Größenverteilung der Primärpartikel im Bereich zwischen 800 und 1200 nm ist.

**5.** Plastisol nach Anspruch 2, 3 oder 4,
**dadurch gekennzeichnet,**
**daß** das Polymerisat und/oder Copolymerisat eine bimodale Größenverteilung der Primärpartikel aufweist.

**6.** Plastisol nach Anspruch 5,
**dadurch gekennzeichnet,**
**daß** das Verhältnis des Gewichts der Primärpartikel der ersten Mode zum Gewicht der Primäpartikel der zweiten Mode 1 : 19 bis 1 : 1,22 ist.

**7.** Plastisol nach Anspruch 5,
**dadurch gekennzeichnet,**
**daß** das Verhältnis des Gewichts der Primärpartikel der ersten Mode zum Gewicht der Primärpartikel der zweiten Mode 1 : 3 bis 1 : 1,86 ist.

**8.** Plastisol nach einem oder mehreren der vorhergehenden Ansprüche,
**dadurch gekennzeichnet,**
**daß** der Rest $R^2$ des (Meth)acrylats der Formel I einen linearen oder verzweigten ($C_1$-$C_8$)-Alkylrest umfaßt.

**9.** Plastisol nach einem oder mehreren der vorhergehenden Ansprüche 1 bis 7,
**dadurch gekennzeichnet,**
**daß** der Rest $R^1$ des (Meth)acrylats der Formel I Methyl ist.

**10.** Plastisol nach einem oder mehreren der vorhergehenden Ansprüche,
**dadurch gekennzeichnet,**
**daß** das Polymerisat und/oder Copolymerisat eine physikalische Mischung zweier Emulsionspolymerisate ist.

**11.** Verfahren zur Herstellung von Plastisolen gemäß den vorhergehenden Ansprüchen, bei welchem man die Komponenten I, II und III, sowie gegebenenfalls weitere an sich bekannte Zusätze geeignet miteinander mischt,
**dadurch gekennzeichnet,**
**daß** man als Komponente I Emulsionspolymerisate und/oder -Copolymerisate mit einer bi- oder multimodalen Größenverteilung der Primärpartikel einsetzt.

**12.** Geformter Gegenstand aufweisend ein geliertes Plastisol gemäß einem der vorhergehenden Ansprüche 1-10.

## Claims

**1.** Plastisol comprising in admixture

I. one or more polymers and/or copolymers of (meth)acrylates obtainable by polymerisation of compositions containing as polymerisable constituents

A) 20 to 100 wt% of methyl methacrylate
B) 0 to 80 wt% of a (meth)acrylate of formula I other than methyl methacrylate,

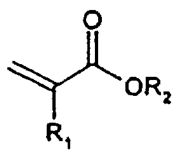

(I)

wherein
$R_1$ denotes hydrogen or methyl and
$R_2$ denotes a straight-chain or branched alkyl group having 1 to 18 carbon atoms,
C) 0 to 40 wt% of another vinylically unsaturated monomer different from A) and B), and
D) 0 to 40 wt% of an adhesion-promoting monomer,

wherein A) to D) make up 100 wt% of the polymerisable constituents,

II. to 100 parts by weight of the polymers and/or polymers from I., plasticisers compatible therewith in amounts of from 5 to 400 parts by weight and

III. to 100 parts by weight of component I., inorganic fillers in amounts of from 0 to 700 parts by weight;

**characterised in that** the polymers and/or copolymers of the (meth)acrylates are emulsion polymers with a bi- or multimodal size distribution of the primary particles.

**2.** Plastisol according to claim 1, **characterised in that** the ratio of the weight of the particles of a first mode of distribution of the primary particle size with a smaller average particle diameter to the weight of the particles of a second mode of size distribution of the primary particles with a larger average particle diameter is less than one.

**3.** Plastisol according to claim 1 or 2, **characterised in that** the average particle diameter of a first mode of size distribution of the primary particles is in the range between 50 and 500 nm, while the average particle diameter of a second mode of distribution of the primary particle sizes is in the range between 600 and 2000 nm.

**4.** Plastisol according to claim 1 or 2, **characterised in that** the average particle diameter of a first mode of size distribution of the primary particles is in the range between 100 and 250 nm, while the average particle diameter of a second mode of size distribution of the primary particles is in the range between 800 and 1200 nm.

**5.** Plastisol according to claim 2, 3 or 4, **characterised in that** the polymer and/or copolymer has a bimodal size distribution of the primary particles.

**6.** Plastisol according to claim 5, **characterised in that** the ratio of the weight of the primary particles of the first mode to the weight of the primary particles of the second mode is from 1:19 to 1:1.22.

**7.** Plastisol according to claim 5, **characterised in that** the ratio of the weight of the primary particles of the first mode to the weight of the primary particles of the second mode is from 1:3 to 1:1.86.

**8.** Plastisol according to one or more of the preceding claims, **characterised in that** the group $R^2$ of the (meth) acrylate of formula I has a straight-chain or branched $C_{1-8}$ alkyl group.

**9.** Plastisol according to one or more of the preceding claims 1 to 7, **characterised in that** the group $R^1$ of the (meth) acrylate of formula I is methyl.

**10.** Plastisol according to one or more of the preceding claims, **characterised in that** the polymer and/or copolymer is a physical mixture of two emulsion polymers.

**11.** Process for preparing plastisols according to the preceding claims, wherein components I, II and III and optionally other additives known *per se* are suitably mixed together, **characterised in that** emulsion polymers and/or copolymers with a bi- or multimodal size distribution of the primary particles are used as component I.

**12.** Shaped object comprising a gelatinised plastisol according to one of the preceding claims 1 to 10.

**Revendications**

**1.** Plastisol possédant en mélange

I. un ou plusieurs produits de polymérisation et/ou de copolymérisation de (méth)acrylates accessibles par polymérisation de compositions contenant comme constituants polymérisables

A) de 20 à 100 % en poids de méthacrylate de méthyle,
B) de 0 à 80 % en poids d'un (méth)acrylate différente du méthacrylate de méthyle, de formule I

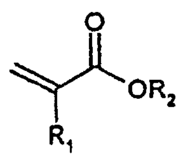

(I)

dans laquelle
$R_1$ représente de l'hydrogène ou un méthyle,
$R_2$ représente un reste alkyle linéaire ou ramifié, ayant de 1 à 18 atomes de carbone,
C) de 0 à 40 % en poids d'un autre monomère insaturé vinyliquement, différent de A) et de B) et
D) de 0 à 40 % en poids d'un monomère qui favorise l'adhésion dans lesquels A à D constituent 100 % en poids des constituants polymérisables,

II. pour 100 parties en poids des polymérisats et/ou copolymérisats provenant de I, avec ces agents plastifiants compatibles en quantités allant de 5 à 400 parties en poids, et
III. pour 100 parties en poids des composants I des substances de charge anorganiques en quantités allant de 0 à 700 parties en poids,

**caractérisé en ce que**
les polymérisats et/ou copolymérisats des (méth)acrylates sont des produits de polymérisation en émulsion ayant une distribution de tailles bi-ou multimodale des particules primaires.

**2.** Plastisol selon la revendication 1,
**caractérisé en ce que**
le rapport du poids des particules d'un premier mode de distribution de la taille des particules primaires ayant le diamètre moyen de particules plus petit au poids des particules d'un deuxième mode de distribution de tailles des particules primaires, est plus petit que un.

**3.** Plastisol selon la revendication 1 ou la revendication 2,
**caractérisé en ce que**
le diamètre moyen des particules d'un premier mode de distribution de tailles des particules primaires est situé

dans la plage comprise entre 50 et 500 nm alors que le diamètre moyen des particules d'un deuxième mode de distribution des tailles de particules primaires se situe dans la plage comprise entre 600 et 2000 nm.

**4.** Plastisol selon la revendication 1 ou la revendication 2,
**caractérisé en ce que**
le diamètre moyen des particules d'un premier mode de distribution des tailles des particules primaires se situe dans la plage comprise entre 100 et 250 nm alors que le diamètre moyen des particules d'un deuxième mode de distribution des tailles de particules primaires se situe dans la plage comprise entre 800 et 1200 nm.

**5.** Plastisol selon la revendication 2, 3 ou 4,
**caractérisé en ce que**
le polymérisat et/ou le copolymérisat possède une distribution bimodale des tailles des particules primaires.

**6.** Plastisol selon la revendication 5,
**caractérisé en ce que**
le rapport du poids des particules primaires du premier mode au poids des particules primaires du deuxième mode varie de 1 : 19 à 1 : 1,22.

**7.** Plastisol selon la revendication 5,
**caractérisé en ce que**
le rapport du poids des particules primaires du premier mode au poids des particules primaires du deuxième mode varie de 1 : 3 à 1 : 1,86.

**8.** Plastisol selon l'une ou plusieurs des revendications précédentes,
**caractérisé en ce que**
le reste $R_2$ du méthacrylate de formule I comprend un reste alkyle en $C_1$-$C_8$ linéaire ou ramifié.

**9.** Plastisol selon l'une ou plusieurs des revendications précédentes 1 à 7,
**caractérisé en ce que**
le reste $R_1$ du (méth)acrylate de formule 1 est un méthyle.

**10.** Plastisol selon l'une ou plusieurs des revendications précédentes,
**caractérisé en ce que**
le polymérisat et/ou le copolymérisat est un mélange physique de deux polymérisats en émulsion.

**11.** Procédé de préparation de plastisol conformément aux revendications précédentes dans lequel on mélange les uns avec les autres les composants I, II et III ainsi qu'éventuellement d'autres additifs connus en soi,
**caractérisé en ce qu'**
on met en oeuvre comme composant I des polymérisats et/ou des copolymérisats en émulsion ayant une distribution bi- ou multimodale de tailles des particules primaires.

**12.** Objet moulé possédant un plastisol gélifié conformément à l'une des revendications précédentes 1 à 10.